# EUROPÄISCHE PATENTSCHRIFT

(11) **EP 3 580 270 B1**
(45) Veröffentlichungstag und Bekanntmachung des Hinweises auf die Patenterteilung: **10.03.2021**
(21) Anmeldenummer: 18712505.9
(22) Anmeldetag: 07.02.2018
(51) Int. Cl.: C08K 5/20, C08K 3/20, C08L 23/00

(54) **PULVERPARTIKELFÖRMIGE DIAMID-POLYOLEFINWACHS-MISCHUNG**
POWDER PARTICLE SHAPED DIAMIDE POLYOLEFIN WAX MIXTURE
MÉLANGE DE CIRE DE DIAMIDE-POLYOLÉFINE SOUS FORME DE PARTICULES PULVÉRULENTES

(30) Priorität: 10.02.2017 EP 17155596; 17.05.2017 EP 17171608
(43) Veröffentlichungstag der Anmeldung: 18.12.2019
(73) Patentinhaber: BYK-Chemie GmbH, 46483 Wesel (DE)
(72) Erfinder: KNAPPKE-BONGARTZ, Christiane, 46483 Wesel (DE); NAGELSDIEK, René, 46483 Wesel (DE); BÜHNE, Sylvia, 46483 Wesel (DE); JOHANN, Meike, 46483 Wesel (DE); KLEIN, Agnetha, 46483 Wesel (DE); TIEMANN, Andre, 46483 Wesel (DE)
(74) Vertreter: Altana IP Department
(86) Internationale Anmeldenummer: PCT/EP2018/052992
(87) Internationale Veröffentlichungsnummer: WO 2018/146114

(56) Entgegenhaltungen:
- DATABASE WPI Week 201322 Thomson Scientific, London, GB; AN 2013-D42298 XP002775365, & JP 2013 049761 A (KUSUMOTO KASEI KK) 14. März 2013 (2013-03-14) in der Anmeldung erwähnt -& DATABASE CA [Online] CHEMICAL ABSTRACTS SERVICE, COLUMBUS, OHIO, US; 14. März 2013 (2013-03-14), OUCHI, HIROKI ET AL: "Powdery thixotropic agents for nonaqueous anticorrosion coatings and manufacture thereof", XP002781879, gefunden im STN Database accession no. 2013:379920 -& JP 2013 049761 A (KUSUMOTO CHEMICALS) 14. März 2013 (2013-03-14)

## Beschreibung

Die vorliegende Erfindung betrifft bei Raumtemperatur (worunter hierin 23 °C verstanden wird) pulverförmige Diamid-Polyolefinwachs-Mischungen, deren Herstellung und Verwendung als Rheologiesteuerungsmittel.

### Stand der Technik

Amide, insbesondere Bishydroxysteramide, sind an sich bekannte Verbindungen, die als Rheologiesteuerungsmittel in flüssigen Formulierungen, insbesondere Lacken und flüssigen Harzformulierungen zur Herstellung von Duromeren Anwendung finden. Sie dienen in der Regel sowohl dem Aufbau höherer Schichtdicken sowie auch der Verbesserung des Anti-Absetzverhaltens der so additivierten flüssigen Formulierungen.

Ebenfalls bekannt ist, dass solche Amide in Kombination mit anderen Komponenten, so beispielsweise oxidierten Polyethylen-Wachsen, als Rheologiesteuerungsmittel eingesetzt werden können.

Bei entsprechend additivierten flüssigen Formulierungen ergibt sich in der Praxis das Problem, dass die rheologischen Eigenschaften zwar durch Einsatz entsprechender Rheologiesteuerungsmittel positiv beeinflusst werden können, jedoch andere relevante Eigenschaften der applizierten Formulierung oder des daraus hergestellten gehärteten Lackes oder vernetzter Duromere negativ beeinflusst werden. Zu diesen Eigenschaften zählen insbesondere die Vergilbungsneigung, der Glanz, die Haftungseigenschaften, insbesondere die Zwischenschichthaftung und die Oberflächenspannung, vor allem im Hinblick auf eine Lackierbarkeit oder Überlackierbarkeit.

Die US 3,937,678 beschreibt nichtwässrige flüssige Systeme, die feinzerteilte Feststoffe enthalten und über verbesserte rheologische Eigenschaften verfügen. Diese Systeme enthalten zum einen ein Amid aus einem primären oder sekundären Amin und einer Carbonsäuremischung enthaltend hydrierte Ricinusölfettsäure und zum anderen ein emulgierbares Polyethylenwachs. Im experimentellen Teil der US 3,937,678 werden vornehmlich flüssige, jedoch auch weniger bevorzugte feste Mischungen aus getrennt hergestellter beziehungsweise getrennt mikronisierter Amid- und Polyethlyenwachs-Komponente eingesetzt. Diese getrennt erhaltenen Bestandteile können physikalisch vorvermischt oder getrennt den Zielsystemen zugegeben werden. Beide Komponenten in einer einzigen festen Partikelform zu vereinen wird im allgemeinen Teil der US 3,937,678 als weniger bevorzugt auf eutektische Zusammensetzungen, das heißt auf solche, die am eutektischen Punkt vorliegen, beschränkt.

In der JP 5756372 werden pulverförmige Antiablaufmittel beschrieben, die aus einem Diamid und einem carboxylgruppenhaltigen Polyolefinwachs erhalten werden. Der Mindestanteil an Diamid beträgt gemäß der Erfindung der JP 5756372 40 Gew.-% bezogen auf das Gesamtgewicht des Antiablaufmittels, da sonst die Antiablaufeigenschaften nicht gewährleistet wären. Ungeachtet der Tatsache, dass die in der JP 5756372 offenbarte Erfindung zwingend von einem Mindestgehalt von 40 Gew.-% an Diamid im Antiablaufmittel ausgeht, misslang die Herstellung eines pulverförmigen Antiablaufmittels aus nur 30 Gewichtsteilen eines Diamids auf Basis eines Reaktionsprodukts zwischen Hexamethylendiamin und hydrierter Ricinusölfettsäure einerseits, und 70 Gewichtsteilen eines oxidierten Polyethylens andererseits (Vergleichsbeispiel 15 in der JP 5756372). Das dort erhaltene Produkt ließ sich offenbar nicht pulverisieren. Inwieweit dies an einem Fehler bei der Herstellung der Schmelze oder der anschließend versuchten Pulverisierung mit einer nicht näher spezifizierten Mahlvorrichtung lag, ist der JP 5756372 nicht entnehmbar.

Aufgabe der vorliegenden Erfindung war daher, eine Diamid-Polyolefinwachs-Mischung bereitzustellen, die als Rheologiesteuerungsmittel gute rheologische Eigenschaften der additivierten flüssigen Formulierung erlaubt, insbesondere als Antiablaufmittel und Antiabsetzmittel dient, und gleichzeitig die zuvor genannten weiteren Eigenschaften der applizierten Formulierung oder der daraus hergestellten gehärteten Produkte nicht beeinträchtigt.

Insbesondere ist es wünschenswert, dass optische Eigenschaften, der unter Verwendung der Diamid-Polyolefinwachs-Mischungen hergestellten und gehärteten Formulierungen wie eine verminderte Vergilbungsneigung und ein guter Glanz gegeben oder zumindest nicht beeinträchtigt sind. Ebenfalls sollen die Haftungseigenschaften, insbesondere die Zwischenschichthaftung und die Oberflächenspannung gehärteter Beschichtungen aus Beschichtungsmitteln, die die erfindungsgemäßen Diamid-Polyolefinwachs-Mischungen enthalten, nicht beeinträchtigt sein oder gar verbessert sein. Dies gilt vor allem im Hinblick auf die Lackierbarkeit oder Überlackierbarkeit gehärteter Beschichtungen.

Überraschenderweise wurde gefunden, dass diese Aufgabe gelöst wurde durch die Bereitstellung einer Diamid-Polyolefinwachs-Mischung umfassend oder bestehend aus,
(A) einem oder mehreren Diamiden, die eine Struktur der Formel (I)

   X¹-CO-NH-Y-NH-CO-X² (I)

   besitzen, worin
   X¹ und X², gleich oder verschieden sind und für lineare oder verzweigte, gesättigte oder ungesättigte, gegebenenfalls substituierte Kohlenwasserstoffreste mit 3 bis 29, bevorzugt 5 bis 23, und besonders bevorzugt 7 bis 19 Kohlenstoffatomen stehen und wenigstens einer der Reste X¹ und X² mindestens eine Hydroxylgruppe, vorzugsweise 1 oder 2 Hydroxylgruppen und besonders bevorzugt genau eine Hydroxylgruppe trägt, und X¹ und/oder X² gegebenenfalls eine oder mehrere Ketogruppen enthält.
   Y für einen zweiwertigen organischen Rest steht, der gewählt ist aus der Gruppe bestehend aus aliphatischen Resten mit 2 bis 26 Kohlenstoffatomen, aromatischen Resten mit 6 bis 24 Kohlenstoffatomen oder araliphatischen Resten mit 7 bis 24 Kohlenstoffatomen, und Y gegebenenfalls sekundäre oder tertiäre Aminogruppen, bevorzugt nur tertiäre Aminogruppen, enthält;
(B) einem oder mehreren carboxylgruppenhaltigen Polyolefinwachsen (B), die eine Säurezahl von 3 bis 50, vorzugsweise 5 bis 40, besonders bevorzugt 8 bis 35, ganz besonders bevorzugt 10 bis 25 mg KOH/g, besser noch 13 bis 20 mg KOH/g aufweisen; und gegebenenfalls
(C) einer oder mehrerer Spezies gewählt aus der Gruppe bestehend aus
   (i) einem oder mehreren nicht unter die Definition von (A) fallenden Diamiden,
   (ii) einem oder mehreren anorganischen Salzen, Metall- oder Halbmetalloxiden,
wobei
das oder die Diamide (A) bezogen auf das Gesamtgewicht der Diamid-Polyolefinwachs-Mischung in einer Menge von 20 Gew.-% bis weniger als 40 Gew.-%, vorzugsweise 20 bis 39 Gew.-%, besonders bevorzugt 25 bis 39 Gew.-%, ganz besonders bevorzugt mehr als 30 bis 39 Gew.-% am bevorzugtesten in einer Menge von 31 bis 39 Gew.-%, wie beispielsweise 35 bis 39 Gew.-%,
das oder die Polyolefinwachse (B) bezogen auf das Gesamtgewicht der Diamid-Polyolefinwachs-Mischung in einer Menge von mehr als 60 Gew.-% bis zu 80 Gew.-%, bevorzugt 61 Gew.-% bis 80 Gew.-%, besonders bevorzugt 61 Gew.-% bis 75 Gew.-%, ganz besonders bevorzugt 61 Gew.-% bis 70 Gew.-%, am bevorzugtesten in einer Menge von 61 Gew.-% bis 69 Gew.-%, wie beispielsweise 61 bis 65 Gew.-%, und
die Spezies (C) in einer Menge von 0 bis 20 Gew.-%, vorzugsweise 0 bis 15 Gew.-%, besonders bevorzugt 0 bis 10 Gew.-%, ganz besonders bevorzugt 0 bis 5 Gew.-%, wie beispielsweise 1 bis 3 Gew.-%,
enthalten sind,
dadurch gekennzeichnet,
   (a) dass die Diamid-Polyolefinwachs-Mischung bei 25 °C als partikelförmiger Feststoff mit einer Partikelgrößenverteilung von 5 µm ≤ d₉₀ ≦ 100 µm, 1 µm ≤ d₅₀ ≤ 50 µm und 0,1 µm ≤ d₁₀ ≤ 20 µm, bevorzugt mit einer Partikelgrößenverteilung von 5 µm ≤ d₉₀ ≤ 50 µm, 1 µm ≤ d₅₀ ≤ 35 µm und 0,1 µm ≤ d₁₀ ≤ 15 µm, besonders bevorzugt mit einer Partikelgrößenverteilung von 6 µm ≤ d₉₀ ≤ 25 µm, 2 µm ≤ d₅₀ ≤ 16 µm und 0,5 µm ≤ d₁₀ ≤ 9 µm, am bevorzugtesten mit einer Partikelgrößenverteilung von 8 µm ≤ d₉₀ 18 µm, 4 µm ≤ d₅₀ ≤ 11 µm und 1 µm ≤ d₁₀ ≤ 4 µm, gemessen trocken mittels Laserbeugungs-Technologie (mit einem HELOS Gerät mit RODOS-Trockendispergiereinheit der Sympatec GmbH) gemäß ISO 13320:2009, vorliegt,
   (b) die Partikel (A) und (B) und, sofern (C) zu mehr als 0 Gew.-%, bezogen auf das Gesamtgewicht der Diamid-Polyolefinwachs-Mischung enthalten ist, ebenso (C) enthalten,
   (c) die Summe der gewichtsprozentualen Anteile der Diamide (A) und (C)(i), bezogen auf das Gesamtgewicht der Diamid-Polyolefinwachs-Mischung, weniger als 40 Gew.-%, vorzugsweise maximal 39 Gew.-%, besonders bevorzugt maximal 38 Gew.-% beträgt.

### Diamide (A)

Die Diamide (A) lassen sich vorzugsweise durch Kondensationsreaktion von Diaminen (II)

H₂N-Y-NH₂ (II)

mit Monocarbonsäuren (lila) und (IIIb)

X¹-COOH (IIIa)

X²-COOH (IIIb)

herstellen.

Alternativ zu den Monocarbonsäuren (lila) und (IIIb) können auch deren reaktive Derivate, vorzugsweise Ester (wie beispielsweise Glyceride), Anhydride oder Halogenide mit dem Amin unter Bildung des Diamids (A) zur Reaktion gebracht werden.

Die in den Formeln (II) und (lila) sowie (IIIb) enthaltenen Reste Y, X¹ und X² entsprechen den in Formel (I) angegebenen Resten. Dementsprechend stellen alle in dieser Schrift genannten bevorzugten Ausführungsformen der Reste Y, X¹ und X² bevorzugte Ausführungsformen sowohl für das Diamid (A) als auch für die zur Synthese verwendeten Ausgangsverbindungen der Formel (II), (lila) und (IIIb) gleichermaßen dar, unabhängig davon, ob sie in Zusammenhang mit Formel (I), (II), (lila) oder (IIIb) Erwähnung finden.

Bei den Diaminen (II) handelt es sich vorzugsweise um aliphatische, aromatische oder araliphatische primäre Diamine, wobei der Begriff "aliphatisch" hierin "cycloaliphatisch" einschließt.

Der Rest Y ist ein zweiwertiger organischer Rest, vorzugsweise ein reiner Kohlenwasserstoff-Rest, das heißt ein Rest der ausschließlich aus Kohlenstoffatomen und Wasserstoffatomen aufgebaut ist. Eine ebenfalls bevorzugte Ausführungsform des Restes Y ist ein zweiwertiger Kohlenwasserstoff-Rest, der neben Kohlenstoffatomen auch tertiäre Stickstoff-Atome (das heißt Stickstoffatome, die über drei N-C-Einfachbindungen verfügen) enthalten darf.

Der Rest Y kann gesättigt oder ungesättigt sein, bevorzugt ist er gesättigt.

Handelt es sich bei den Resten Y um lineare aliphatische Kohlenwasserstoff-Reste, so enthalten diese vorzugsweise 2 bis 20, besonders bevorzugt 2 bis 16, ganz besonders bevorzugt 2 bis 12, besser noch 2 bis 6 oder 2 bis 8 Kohlenstoffatome.

Handelt es sich bei den Resten Y um verzweigte aliphatische Kohlenwasserstoff-Reste, so enthalten diese vorzugsweise 3 bis 20, besonders bevorzugt 3 bis 16, ganz besonders bevorzugt 3 bis 12, besser noch 3 bis 11 oder 3 bis 8 Kohlenstoffatome.

Handelt es sich bei den Resten Y um cycloaliphatische Kohlenwasserstoff-Reste, so enthalten diese Rest vorzugsweise 3 bis 18, besonders bevorzugt 4 bis 15, ganz besonders bevorzugt 6 bis 13, besser noch 6 bis 10 oder 6 bis 8 Kohlenstoffatome.

Handelt es sich bei den Resten Y um aromatische Kohlenwasserstoff-Reste, so enthalten diese Rest vorzugsweise 6 bis 18, besonders bevorzugt 4 bis 15, ganz besonders bevorzugt 6 bis 13, besser noch 6 bis 10 oder 6 bis 8 Kohlenstoffatome. Von aromatischen Resten Y wird hierin gesprochen, wenn mindestens eine, vorzugsweise beide NH₂-Gruppen in Formel (II) direkt an ein aromatisches Ringsystem gebunden sind.

Handelt es sich bei den Resten Y um araliphatische Kohlenwasserstoff-Reste, so enthalten diese Rest vorzugsweise 7 bis 18, besonders bevorzugt 7 bis 15, ganz besonders bevorzugt 7 bis 13, besser noch 7 bis 10, bis 9 oder bis 8 Kohlenstoffatome. Von araliphatischen Resten Y wird hierin gesprochen, wenn beide NH₂-Gruppen in Formel (II) an ein Kohlenstoffatom gebunden sind, welches keinem aromatischen Ringsystem angehört, der Rest Y aber dennoch aromatische Reste enthält.

Beispiele für lineare aliphatische Diamine (II) sind Ethylendiamin, 1,2- und 1,3-Propandiamin, 1,4-Butandiamin, 1,5-Pentandiamin, 1,6-Hexamethylendiamin, 1,8-Octamethylendiamin und 1,12-Dodecamethylendiamin, für verzweigte aliphatische Diamine (II) 1,3-Diaminoneopentan und 2-Butyl-2-ethyl-1,5-pentandiamin, für cycloaliphatische Diamine (II) 1,2-, 1,3- und 1,4-Diaminocyclohexan, 1,2-, 1,3-und 1,4-(Aminomethyl)-cyclohexan, 4,4'-Diaminodicyclohexylmethan, 3,3'-Dimethyl-4,4'-Diaminodicyclohexylmethan und Isophorondiamin, sowie für aromatische Diamine (II) 4,4'-Diaminodiphenylmethan, sowie für araliphatische Diamine (II) para- und meta-Xylylendiamin.

Wie bereits oben erwähnt fallen unter die Gruppe der aliphatischen Diamine (II) auch Diamine vom Typus H₂N-R-[NR'-R]ₙ-NH₂, wobei R unabhängig für (C₁-C₁₈)-Alkylen steht und R' unabhängig für eine (C₁-C₄)-Alkylgruppe steht und n eine ganze Zahl von 1 bis 5 ist. Ein Beispiel hierfür ist N,N'-Bis-(3-aminopropyl)methylamin.

Bevorzugt werden lineare aliphatische oder araliphatische Diamine, insbesondere Ethylendiamin, 1,4-Butandiamin, 1,6-Hexamethylendiamin, 1,8-Octamethylendiamin und Xylylendiamin (insbesondere m-Xylylendiamin) eingesetzt. Rein aliphatische α,ω-Diamine sind besonders bevorzugt.

Der Einsatz von Mischungen der Diamine ist ebenfalls möglich.

Die Diamine werden vorzugsweise mit einer oder mehreren der im Folgenden genannten Monocarbonsäuren (lila) und (IIIb) in einer Kondensationsreaktion zu den Diamiden (A) umgesetzt.

Bei den Monocarbonsäuren (IIIa) und (IIIb) handelt es sich vorzugsweise um aliphatische, lineare oder verzweigte, gesättigte oder ungesättigte Monocarbonsäuren.

Bevorzugt stehen X¹ und X² in den Formeln (IIIa) und (IIIb) für lineare oder verzweigte, gesättigte oder ungesättigte, gegebenenfalls mit einer oder mehreren Hydroxylgruppen substituierte Kohlenwasserstoffreste mit 3 bis 29, bevorzugt 5 bis 23, und besonders bevorzugt 7 bis 19 Kohlenstoffatomen.

Besonders bevorzugt stehen X¹ und X² in den Formeln (IIIa) und (IIIb) für lineare gesättigte oder ungesättigte, gegebenenfalls mit einer oder mehreren Hydroxylgruppen, vorzugsweise 1 oder 2 Hydroxylgruppen, besonders bevorzugt genau einer Hydroxylgruppe substituierte Kohlenwasserstoffreste mit 3 bis 29, bevorzugt 5 bis 23, und besonders bevorzugt 7 bis 19 Kohlenstoffatomen. X¹ und X² können unabhängig vom zwingenden Vorhandensein mindestens einer Hydroxylgruppe in einem der beiden Reste X¹ und X² eine oder mehrere Ketogruppen enthalten. Sind ein oder mehrere Ketogruppen enthaltend, so kann diese oder können diese im gleichen Rest vorliegen, der die mindestens eine Hydroxylgruppe trägt oder, sofern ein hydroxylgruppenfreier Rest vorhanden ist, kann die Ketogruppe auch in diesem vorliegen.

Besonders bevorzugt ist es, wenn der Anteil der Carbonsäuren mit mindestens einer Hydroxylgruppe bezogen auf die Gesamtheit der eingesetzten Monocarbonsäuren mindestens 50 mol%, bevorzugt mindestens 70 mol%, besonders bevorzugt mindestens 80 mol%, ganz besonders bevorzugt mindestens 85 %, am besten mindestens 87 oder mindestens 90 mol% beträgt.

Ganz besonders bevorzugt handelt es sich bei den Monocarbonsäuren X¹-COOH und X²-COOH um gesättigte, lineare Monocarbonsäuren mit genau einer Hydroxylgruppe und 6 bis 24 Kohlenstoffatomen, wobei vorzugsweise die COOH-Gruppe und die OH-Gruppe durch 5 bis 17, besonders bevorzugt 8 bis 15 und ganz besonders bevorzugt 11 bis 13 Kohlenstoffatome getrennt sind.

Die Reste X¹ und X² können identisch oder verschieden sein.

Besonders bevorzugt steht X¹ für einen Rest CH₃(CH₂)₅CH(OH)(CH₂)₁₀ und X2 für einen Rest ausgewählt aus der Gruppe bestehend aus CH₃(CH₂)₅CH(OH)(CH₂)₁₀, C₁₅H₃₁, C₁₇H₃₅, C₁₇H₃₃, C₉H₁₉, C₁₁H₂₃, C₇H₁5 und C₅H₁₁, wobei besonders bevorzugt mindestens 40 mol%, ganz besonders bevorzugt mindestens 60 mol%, noch bevorzugter mindestens 70 mol% und am besten mindestens 80 mol%, mindestens 85 mol% oder besser noch mindestens 90 mol% der Reste X² für eine Gruppe CH₃(CH₂)₅CH(OH)(CH₂)₁₀ stehen.

Bevorzugte Hydroxylgruppen enthaltende Monocarbonsäuren sind ω-Hydroxyhexansäure, 12-Hydroxylaurinsäure, 16-Hydroxyhexadecansäure, 9-Hydroxystearinsäure, 10-Hydroxystearinsäure, 12-Hydroxystearinsäure, 14-Hydroxyeicosansäure, Ricinolfettsäure und hydrierte Ricinolfettsäure.

Ganz besonders bevorzugte hydroxylfunktionelle Carbonsäuren sind 12-Hydroxystearinsäure beziehungsweise hydrierte Ricinolfettsäure.

Bevorzugte nicht hydroxyfunktionelle Monocarbonsäuren, welche in Kombination mit den hydroxyfunktionelle Monocarbonsäuren eingesetzt werden können, sind Palmitinsäure, Stearinsäure, Ölsäure, Caprinsäure, Laurinsäure, Capronsäure, n-Octansäure, Behensäure und Montansäure.

Besonders bevorzugte nicht-hydroxylfunktionelle Monocarbonsäuren sind Stearinsäure und Ölsäure.

Die Diamidkomponente (A) ist üblicherweise bei Raumtemperatur (23 °C) fest.

Mischungen mit weniger als 20 Gew.% Diamidkomponente (A), bezogen auf das Gesamtgewicht der Diamid-Polyolefinwachs-Mischung, lassen sich nicht mehr hinreichend gut zerkleinern, insbesondere in eine Pulverform überführen, so dass das Material nicht mehr in die für die Endanwendung geeignete Form überführt werden kann.

Mischungen mit 40 Gew.% und mehr in der Summe der Diamidkomponente (A) plus der gegebenenfalls enthaltenen Spezies (C)(i), bezogen auf das Gesamtgewicht der Diamid-Polyolefinwachs-Mischung, führen in der Anwendung zu verschlechterten Lackeigenschaften, wie z. B. verschlechterter Haftung, erhöhter Vergilbungsneigung und höherem Gleitwiderstand.

### Polyolefinwachse (B)

Wie der Begriff Wachs bereits beinhaltet, handelt es sich bei den Carboxylgruppen enthaltenden Polyolefinwachsen (B) um bei Raumtemperatur (23 °C) feste Stoffe.

Der Begriff Olefin umfasst hierin vor allem die für Polyolefine typischen Alkene, vorzugsweise Alkene mit 2 bis 8, besonders bevorzugt Alkene mit 2 bis 6 und ganz besonders bevorzugt Alkene mit 2 bis 4 Kohlenstoffatomen, besonders bevorzugt mit endständiger Doppelbindung. Bevorzugte Vertreter sind im Rahmen der vorliegenden Erfindung Ethylen, Propylen, 1-Buten und Isobuten. Besonders bevorzugte Olefin-Monomere sind im Rahmen der vorliegenden Erfindung Ethylen und Propylen.

Unter dem Begriff Polyolefin werden in der Regel Homopolymere einer einzigen Art eines Olefin-Monomers (beispielsweise Ethylen-Homopolymere) oder Copolymere aus mehreren Olefin-Monomeren (beispielsweise Polymere aus Mischungen umfassend oder bestehend aus Ethylen, Propylen, 1-Buten und/oder Isobuten) verstanden. Die Polyolefine enthalten somit eine oder mehrere Arten an Olefin-Monomeren und sind demzufolge Homopolymere oder Copolymere. Sie können jedoch auch zusätzlich eines oder mehrere von Olefin-Monomeren verschiedene ethylenisch ungesättigte Monomere, insbesondere Carbonsäuregruppen tragende ethylenisch ungesättigte Monomere, einpolymerisiert oder angepfropft enthalten. Werden zwecks Einpolymerisieren oder Pfropfung von den Olefin-Monomeren verschiedene ethylenisch ungesättigte Monomere mit Carboxylgruppen oder Carbonsäureanydridgruppen eingesetzt so geschieht dies in einer Menge, dass das Carboxylgruppen enthaltende Polyolefinwachs (B) eine Säurezahl im Bereich von 3 bis 50, vorzugsweise 5 bis 40, besonders bevorzugt 8 bis 35, ganz besonders bevorzugt 10 bis 25 und insbesondere bevorzugt 13 bis 20 mg KOH/g besitzt.

Vorzugsweise genügen die Carboxylgruppen enthaltenden Polyolefinwachse (B) der vorliegenden Erfindung der Definition von Wachsen nach der Deutschen Gesellschaft für Fettwissenschaft (DGF-Einheitsmethode M-I 1 (75)). Demnach sind Wachse bei 20 °C knetbar und fest bis brüchig hart, sie besitzen eine grobe bis feinkristalline Struktur, sind farblich durchscheinend bis opak jedoch nicht glasartig, schmelzen bei Temperaturen über 40 °C ohne Zersetzung, sind wenig oberhalb des Schmelzpunktes leicht flüssig (wenig viskos), weisen eine stark temperaturabhängige Konsistenz und Löslichkeit auf und sind unter leichtem Druck polierbar.

Die Carboxylgruppen enthaltenden Polyolefinwachse (B) werden vorzugsweise gemäß einer der folgenden drei verschiedenen Verfahren erhalten:
1. durch Oxidation unpolarer Polyolefinwachse, insbesondere unpolarer Polyethylenwachse (Schmelzoxidation) oder durch oxidativen Abbau von Polyolefinkunststoffen wie insbesondere Polyethylenkunststoffen
2. durch Polymerisation, vorzugsweise radikalische Polymerisation und besonders bevorzugt radikalische Hochdruckpolymerisation von Olefinen, insbesondere Ethylen und/oder Propylen mit carboxylgruppenhaltigen Monomeren wie beispielsweise Acrylsäure, oder
3. durch radikalisches Propfen carboxylgruppenhaltiger ungesättigter Monomere wie beispielsweise Maleinsäureanhydrid auf unpolare Polyolefinwachse wie insbesondere Polyethylenwachse und/oder Polypropylenwachse.

Folglich werden als Carboxylgruppen enthaltende Polyolefinwachse (B) solche bevorzugt, die (a) durch Oxidation, insbesondere Schmelzoxidation, von Polyolefinwachsen, vorzugsweise unpolaren Polyolefinwachsen, (b) durch oxidativen Abbau von Polyolefinkunststoffen, (c) durch Polymerisation, vorzugsweise radikalische Polymerisation und besonders bevorzugt radikalische Hochdruckpolymerisation von Olefinen mit carboxylgruppenhaltigen oder carbonsäureanhydridhaltigen ethylenisch ungesättigten Monomeren oder (d) durch Pfropfen, insbesondere radikalisches Pfropfen, carboxylgruppenhaltiger oder carbonsäureanhydridgruppenhaltiger ethylenisch ungesättigter Monomere auf Polyolefinwachse, vorzugsweise unpolare Polyolefinwachse, erhalten werden.

Das Carboxylgruppen enthaltende Polyolefinwachs (B) ist vorzugsweise ein Homopolymer oder Copolymer mindestens eines Olefin-Monomers, vorzugsweise eines α-Olefins.

Vorzugsweise werden die Polyolefinwachse (B) gewählt aus der Gruppe bestehend aus oxidierten Polyethylen-Wachsen, oxidierten Polypropylen-Wachsen, oxidierten Poly(ethylen-co-propylen)-Wachsen und von den vorgenannten Copolymeren verschiedenen oxidierten Ethylen-α-Olefin-Copolymeren, Ethylen-(Meth)acrylsäure-Copolymeren und Polymerisaten von Ethylen und/oder Propylen, die beispielsweise mit Maleinsäureanhydrid gepfropft wurden (überführt in die hydrolysierte Form, d.h. freie COOH-Gruppen tragend). Zur Pfropfung können selbstverständlich auch andere ethylenisch ungesättigte Säuren wie Acrylsäure zum Einsatz kommen. Für alle Polyolefinwachse (B) müssen selbstverständlich die oben angegebenen Maßgaben an die Säurezahl der Polyolefinwachse (B) erfüllt sein.

Bevorzugt handelt es sich beim carboxylgruppenhaltigen Polyolefinwachs (B), um ein Ethylen-Homo- oder -Copolymer, das zugänglich ist, entweder durch Polymerisation von ausschließlich Ethylen oder durch Copolymerisation von Ethylen und mindestens einem weiteren alpha-Olefin, vorzugsweise Propylen, wobei der Anteil von Ethylen bezogen auf die Gesamtmasse von Ethylen und weiteren alpha-Olefinen vorzugsweise mindestens 60 Gew.%, besser noch mindestens 80 Gew.% beträgt, und wobei das Ethylen-Homo- oder - Copolymer vorzugsweise durch einen oxidativen Prozess mit sauerstoffhaltigen funktionellen Gruppen, darunter insbesondere mindestens einer COOH-Gruppe ausgerüstet ist. Ganz besonders bevorzugt handelt es sich um ein entsprechendes mit COOH-Gruppen ausgestattetes Ethylen-Homopolymer.

Vorzugsweise besitzen die Polyolefinwachse (B)
i. eine Dichte von 0.85 bis 1.05 g/cm³ bei 23 °C, besonders bevorzugt von 0,92 bis 0,97 g/cm³, bestimmt gemäß EN ISO 1183-1:2012,
ii. einen Tropfpunkt von 85 bis 145 °C, bevorzugt von 90 bis 130 °C, besonders bevorzugt von 95 bis 120 °C und ganz besonders bevorzugt von 97 bis 112 °C, bestimmt gemäß ASTM D-3954: 94(2010).

Derartige Produkte sind beispielsweise unter den Handelbezeichnungen A-C 680, A-C 629 oder A-C 673P von der Firma Honeywell, als Viscowax 252 und Viscowax 253 von der Firma Leuna Innospec, als Deurex EO40 der Firma Deurex, als Licowax PED 521, Licowax PED 522 oder Licolub H 12 von der Firma Clariant oder als Epolene E 14 von der Firma Westlake erhältlich.

### Fakultative Spezies (C)

Die erfindungsgemäße Diamid-Polyolefinwachs-Mischung kann neben den Komponenten (A) und (B) noch bis zu 20 Gew.-% einer oder mehrerer Spezies (C) enthalten, bei welchen es sich um von (A) und (B) verschiedene Spezies handelt, und welche gewählt sind aus der Gruppe bestehend aus:
(i) einem oder mehreren nicht unter die Definition von (A) fallenden Diamiden, und
(ii) einem oder mehreren anorganischen Salzen, Metall- oder Halbmetalloxiden.

Als Spezies (C)(i) sind vorzugsweise solche Diamide enthalten, die eine Struktur der Formel (II)

Z¹-CO-NH-Y-NH-CO-Z² (II)

besitzen, worin
Z¹ und Z², frei von Hydroxylgruppen sind, gleich oder verschieden sind und für lineare oder verzweigte, gesättigte oder ungesättigte, gegebenenfalls substituierte Kohlenwasserstoffreste mit 3 bis 29, bevorzugt 5 bis 23, und besonders bevorzugt 7 bis 19 Kohlenstoffatomen stehen und die Reste Z¹ und Z² gegebenenfalls Ketogruppen enthalten,
Y für einen zweiwertigen organischen Rest steht, der gewählt ist aus der Gruppe bestehend aus aliphatischen Resten mit 2 bis 26 Kohlenstoffatomen, aromatischen Resten mit 6 bis 24 Kohlenstoffatomen oder araliphatischen Resten mit 7 bis 24 Kohlenstoffatomen, und Y gegebenenfalls sekundäre oder tertiäre Aminogruppen, bevorzugt nur tertiäre Aminogruppen, enthält.

Als Spezies (C)(ii) sind vorzugsweise solche anorganischen Salze, Metall- oder Halbmetalloxide enthalten, die typischerweise als Mikronisierungshilfsmittel oder Rieselhilfsmittel Anwendung finden. Vorzugsweise werden diese gewählt aus der Gruppe bestehend aus Kieselsäuren, den Oxiden, Hydroxiden, Oxidhydroxiden, Carbonaten, Sulfaten, Phosphaten und Silikaten der nicht radioaktiven Elemente der 2. Hauptgruppe des Periodensystems der Elemente und des Aluminiums. Bevorzugte Elemente der 2. Hauptgruppe des Periodensystems der Elemente sind Magnesium, Calcium, Strontium und Barium, ganz besonders bevorzugt sind Magnesium, Calcium und Barium. Beispiele geeigneter anorganischer Salze bzw. Metalloxide sind Calciumcarbonat, Magnesiumcarbonat, Calciummagnesiumcarbonat (Dolomit), Magnesiumoxid, Bariumsulfat und Calciumphosphate. Unter den Aluminumsalzen sind dies insbesondere Aluminiumoxid, Aluminiumhydroxid, Aliminiumoxidhydroxid. Als Kieselsäuren sind pyrogene Kieselsäuren und Fällungskieselsäuren zu nennen und als Silikate, insbesondere Alumosilikate oder Talkum. Unbeschadet dessen können alle anorganischen Salze, Metall- oder Halbmetalloxide auch andere nicht radioaktive Elemente des Periodensystems der Elemente enthalten, insbesondere solche der 1. Hauptgruppe wie vorzugsweise Lithium, Natrium und Kalium, insbesondere in Verbindung mit Silkaten. Die Spezies (C)(ii) werden in der Regel so gewählt, dass sich diese gegenüber den anderen Bestandteilen der Diamid-Polyolefinwachs-Mischung weitestgehend, vorzugsweise gänzlich chemisch inert verhalten. Die Spezies (C)(ii) werden in der Regel auch so gewählt, dass diese keine Feuchtigkeit aufnehmen, insbesondere kein hygroskopisches Verhalten zeigen oder mit Wasser zu Spezies reagieren, die sich nicht inert gegenüber den anderen Bestandteilen der Diamid-Polyolefinwachs-Mischung verhalten.

Die Spezies (C) sind üblicherweise bei Raumtemperatur (23 °C) fest.

### Physikalische Charakteristika und Form der erfindungsgemäßen Mischung

Die erfindungsgemäße Diamid-Polyolefinwachs-Mischung liegt anspruchsgemäß bei 23 °C als pulverförmiger Feststoff vor. Vorzugsweise ist die Diamid-Polyolefinwachs-Mischung frei beziehungsweise im Wesentlichen frei von organischen Lösemitteln. Unter der Bezeichnung "im Wesentlichen frei von organischen Lösemitteln" wird vorzugsweise verstanden, dass der Gehalt der erfindungsgemäßen Diamid-Polyolefinwachs-Mischung an organischen Lösemitteln kleiner als 5 Gew.-%, bevorzugt kleiner als 3 Gew.-%, besonders bevorzugt kleiner als 1 Gew.-% und ganz besonders bevorzugt kleiner als 0,5 Gew.-%, bezogen auf das Gesamtgewicht der Diamid-Polyolefinwachs-Mischung (einschließlich des Lösemittelgehalts) ist.

Erfindungsgemäß liegt die Diamid-Polyolefinwachs-Mischung bei 25 °C als partikelförmiger Feststoff mit einer Partikelgrößenverteilung von 5 µm ≤ d₉₀ ≤ 100 µm, 1 µm ≤ d₅₀ ≤ 50 µm und 0,1 µm ≤ d₁₀ ≤ 20 µm vor. Bevorzugt mit einer Partikelgrößenverteilung von 5 µm ≤ d₉₀ 50 µm, 1 µm ≤ d₅₀ ≤ 35 µm und 0,1 µm ≤ d₁₀ ≤ 15 µm, besonders bevorzugt mit einer Partikelgrößenverteilung von 6 µm ≤ d₉₀ ≤ 25 µm, 2 µm ≤ d₅₀ ≤ 16 µm und 0,5 µm ≤ d₁₀ ≤ 9 µm und am besten mit einer Partikelgrößenverteilung von 8 µm ≤ d₉₀ ≤ 18 µm, 4 µm ≤ d₅₀ ≤ 11 µm und 1 µm ≤ d₁₀ ≤ 4 µm, jeweils trocken gemessen mittels Laserbeugung (mit einem HELOS \ BF Gerät mit RODOS Trockendispergiereinheit der Sympatec GmbH unter Verwendung der Software Sympatec Windox 5.7.1.0 und Anwendung der Fraunhofer Theorie). Die Bezeichnungen der vorstehend angegebenen volumetrischen Durchmesser d als d₁₀, d₅₀ und d₉₀ bedeuten, dass 10 %, 50 % bzw. 90 % der Partikel kleiner sind als der angegebene Wert. Der Wert d₅₀ steht somit für die mittlere Partikelgröße (Median).

Wird ein d₉₀-Wert von 100 µm überschritten, so sinkt die rheologische Wirksamkeit der Mischung, insbesondere erhöht sich die Aktivierungszeit im Zielsystem und es kommt vermehrt zu einer unerwünschten Stippenbildung, wenn es sich beim Zielsystem um ein Beschichtungsmittel handelt. Soll der d₁₀-Wert von 0,1 µm unterschritten werden, so ist dies mit einem hohen technischen Aufwand verbunden, der für die anvisierten Anwendungen in der Regel unwirtschaftlich ist, aber auch hinsichtlich der Handhabbarkeit (Umgang mit feinen Stäuben) Nachteile mit sich bringt.

### Herstellverfahren der partikelförmigen Diamid-Polyethylenwachs-Mischung

Bevorzugt findet die Mischung der Diamid-Komponente (A), der carboxylgruppenhaltigen Polyolefin-Komponente (B) und sofern eingesetzt der Spezies (C), in der Schmelze statt. Das heißt die Komponenten (A), (B) und gegebenenfalls (C)(i) werden im flüssigen Zustand homogenisiert, gegebenenfalls werden Spezies (C)(ii) in die Schmelze eingebracht und die homogenisierte Schmelze wird dann abgekühlt. Die Homogenisierung in der Schmelze kann z. B. in einem Kessel unter Rühren erfolgen oder auf einem Mischextruder. Im Anschluss wird die erstarrte Schmelze üblicherweise zunächst grob zerkleinert und anschließend durch einen geeigneten Vermahlungsprozess in ein partikelförmiges, vorzugsweise pulverförmiges Produkt überführt, welches die oben angegebene Partikelgrößenverteilung besitzt. Besonders bevorzugt wird im Vermahlungsprozess eine Fließbett-Gegenstrahlmühle mit Sichter eingesetzt. Mögliche alternative Mühlen sind Spiralstrahlmühlen und Rotor-Prallmühlen mit Sichtereinheit. Prinzipiell ist auch eine kryogene Vermahlung möglich oder der Einsatz anderer Mühlen, die hinsichtlich ihrer Mahleffizienz und Mahlleistung mit den vorgenannten Mühlen vergleichbar sind. Vorteilhaft ist es, wenn der Vermahlungsprozess unter Inertgasatmosphäre wie beispielsweise Stickstoffatmosphäre oder unter Magerluftatmosphäre erfolgt.

Unter Magerluft werden Gasgemische verstanden, welche die üblichen Bestandteile von Luft enthalten, jedoch einen geringeren Sauerstoffanteil und einen höheren Stickstoffanteil. Technisch wird Magerluft daher bevorzugt hergestellt, indem Luft und Stickstoff gemischt werden.

### Anwendungssysteme

Die erfindungsgemäßen Rheologiesteuerungsmittel bestehen aus oder enthalten die erfindungsgemäßen Diamid-Polyolefinwachs-Mischungen und eignen sich bevorzugt zur Rheologiesteuerung von flüssigen Systemen, insbesondere von lösemittelhaltigen und lösemittelfreien Formulierungen.

Die Erfindung betrifft auch die Verwendung der erfindungsgemäßen Zubereitungen zur Rheologiesteuerung einer flüssigen Komposition. Diese flüssige Komposition liegt bevorzugt als Beschichtungsmittel, insbesondere als Lack, als Kunststoffformulierung, als Pigmentpaste (z.B. Effektpigmentpaste), als Dichtstoffformulierung, als Kosmetikum, als Keramikformulierung, als Klebstoffformulierung, als flüssige Formulierungen zum Einsatz bei der Gas- und Ölförderung, als Reinigungsmittel, als Vergussmasse, als Baustoffformulierung, als Schmierstoff, als Spachtelmasse, als flüssige Formulierung zur Herstellung von elektrischen Bauelementen und Schaltkreisen (zum Beispiel bei sogenannten "Printed Electronics"), als flüssige Formulierung zum Einsatz in Energiespeichermedien (zum Beispiel Batterien), als Metallbearbeitungs-Flüssigkeit (Metal Working Fluid), in Form eines Sprühmittels (z.B. als sog. Deposition Aid in Pflanzenschutzmitteln), als Druckfarbe oder als Tinte, beispielsweise als Inkjet-Tinte, vor.

Schließlich betrifft die vorliegende Erfindung eine flüssige Zusammensetzung, die als Beschichtungsmittel, als Kunststoffformulierung, als Pigmentpaste (z.B. Effektpigmentpaste), als Dichtstoffformulierung, als Kosmetikum, als Keramikformulierung, als Klebstoffformulierung, als flüssige Formulierungen zum Einsatz bei der Gas- und Ölförderung, als flüssige Formulierungen zur Herstellung von elektrischen Bauelementen und Schaltkreisen, als flüssige Formulierungen zum Einsatz in Energiespeichermedien, als Reinigungsmittel, als Vergussmasse, als Baustoffformulierung, als Schmierstoff, als Spachtelmasse, als Wachsemulsion, als Metallbearbeitungs-Flüssigkeit, in Form eines Sprühmittels, als Druckfarbe oder als Tinte vorliegt und welche vorzugsweise 0,1 bis 10 Gew.-% des erfindungsgemäßen Rheologiesteuerungsmittels, bezogen auf das Gesamtgewicht der Formulierung enthält. Bevorzugt betrifft die Erfindung eine flüssige Zusammensetzung (das heißt eine Formulierung), welche 0,2 bis 5 Gew.-%, besonders bevorzugt 0,4 bis 3 Gew.%, bezogen auf das Gesamtgewicht der flüssigen Zusammensetzung inklusive des erfindungsgemäßen Rheologiesteuerungsmittels.

Besonders bevorzugt ist hierbei die Verwendung der erfindungsgemäßen Zubereitung als Rheologiesteuerungsmittel zur Rheologiesteuerung von Lacken, Druckfarben, Tinten (wie zum Beispiel Inkjet-Tinten), Kunststoff-Formulierungen, Kosmetikzubereitungen, Reinigungsmitteln, Baustoff-Formulierungen, Metallbearbeitungsflüssigkeiten, Schmiermitteln, Schmierstoffen und/oder Klebstoffen sowie bei Formulierungen, die bei der Erdgas- und Erdölförderung eingesetzt werden.

Bei den Lacken, Druckfarben und Tinten, insbesondere Inkjet-Tinten, handelt es sich vorzugsweise um lösemittelhaltige und lösemittelfreie Lacke, Druckfarben und Tinten, insbesondere Inkjet-Tinten. Lacke sind in unterschiedlichsten Anwendungsfeldern einsetzbar, unter anderem im Bereich Automobillacke, Bautenlacke, Schutzlacke, unter anderem zur Lackierung von Schiffen und Brücken, als Can- und Coil-Coating-Lacke, Holz- und Möbellacke, Industrielacke, Lacke zur Lackierung von Kunststoffen, als Drahtlacke, Beschichtungsmittel zur Beschichtung von Lebensmitteln und Saatgut sowie auch als sogenannte Color Resists, welche für Farbfilter, beispielsweise in Flüssigkristall-Displays eingesetzt werden. Ganz besonders vorteilhaft ist der Einsatz der erfindungsgemäßen Diamid-Polyolefinwachs-Mischungen in Korrosionsschutzbeschichtungsmittelzusammensetzungen, die insbesondere bei der Herstellung von Korrosionsschutzbeschichtungen eingesetzt werden. Der Anwendungsbereich Lacke umfasst auch pastöse Materialien, welche in der Regel einen sehr hohen Anteil an Feststoffen und einen geringen Anteil von flüssigen Komponenten aufweisen, beispielsweise sogenannte Pigmentpasten oder auch Pasten auf Basis von feinverteilten Metallteilchen oder Metallpulvern wie beispielsweise solchen auf Basis von Silber, Kupfer, Zink, Aluminium, Bronze und Messing, welche zum Beispiel als Metalleffektpigmente zum Einsatz kommen; auch sogenannte Perlglanzpigmente und Interferenzpigmente können hier zum Einsatz kommen.

Bei den Kunststoff-Formulierungen kann es sich um (flüssige) Ausgangsmaterialien zur Herstellung von Kunststoff-Materialien handeln, die bevorzugt durch einen chemischen Vernetzungsprozess ("Härtung" zu einem Duromer) umgesetzt werden. Bevorzugte Kunststoffzubereitungen sind ungesättigte Polyesterharze, Vinylesterharze, Acrylatharze, Epoxidharze, Polyurethanharze, Formaldehydharze (wie Melamin-Formaldehyd oder Harnstoff-Formaldehyd). Diese können unter unterschiedlichsten Bedingungen ausgehärtet werden, so z.B. bei Raumtemperatur (kalthärtende Systeme) oder bei erhöhter Temperatur (heißhärtende Systeme), gegebenenfalls auch unter Aufbringung von Druck ("Closed Mold"-Applikation, Sheet Molding Compound oder Bulk Molding Compound). Zu den Kunststoff-Formulierungen zählen auch PVC-Plastisole.

Bei den Kosmetikzubereitungen kann es sich um mannigfaltige, bevorzugt nicht-wässrige, flüssige Zusammensetzungen handeln, die im sogenannten Personal Care- oder auch Health Care-Bereich eingesetzt werden, so beispielsweise Lotionen, Cremes, Pasten, Schäume, Gele oder Arzneiwirkstoffe in gelförmiger Formulierung, Haarshampoo, Flüssigseifen, Nagellacke, Lippenstifte und Haarfärbemittel.

Bei den Sprühmitteln (als Deposition Aids) steht durch den Einsatz der erfindungsgemäßen Rheologiesteuerungsmittel die Abdriftminderung bzw. Abdriftvermeidung ("drift reduction"), vorzugsweise in nicht-wässrigen Sprühmitteln, im Vordergrund.

Bei den Metallbearbeitungsflüssigkeiten kann es sich bevorzugt um lösemittelhaltige und lösemittelfreie Systeme handeln. Beispiele hierfür stellen Schneideflüssigkeiten, Bohrflüssigkeiten (wie sie bei der Metallbearbeitung eingesetzt werden), Trennmittel (beispielsweise für Aluminium-Druckguss und Gießerei-Anwendungen), Gießereischlichten ("Foundry washes" bzw. "Foundry Coatings") und Flüssigkeiten für die Oberflächenbehandlung von Metallen (beispielsweise "Surface Finishing", Oberflächenreinigung und Galvanisierung) dar.

Bei den Schmierstoffen handelt es sich um - vorzugsweise lösemittelhaltige und lösemittelfreie - Mittel, welche zur Schmierung eingesetzt werden, das heißt, die der Verringerung von Reibung und Verschleiß, sowie der Kraftübertragung, Kühlung, Schwingungsdämpfung, Dichtwirkung und dem Korrosionsschutz dienen, wobei hier flüssige Schmierstoffe bevorzugt sind.

Bei den flüssigen Formulierungen zum Einsatz bei der Gas- und Ölförderung handelt es sich um vorzugsweise lösemittelhaltige und lösemittelfreie Flüssigkeiten, die bei der Erschließung einer Lagerstätte oder auch bei der sich anschließenden Ausbeutung derselben zum Einsatz kommen. Bevorzugt sind hier Bohrspülmittel, auch als Bohrschlämme oder Drilling Fluids bezeichnet. Ein Anwendungsgebiet stellen ölbasierte Bohrschlämme dar.

Reinigungsmittel, hier vorzugsweise nicht-wässrige Reinigungsmittel, können der Reinigung von unterschiedlichsten Objekten dienen. Sie bewirken oder unterstützen die Entfernung von Verunreinigungen, Rückständen und Anhaftungen. Zu den Reinigungsmitteln zählen auch Waschmittel (vor allem zur Reinigung von Textilien, deren Vorprodukten und Leder), Putzmittel und Waschmittel sowie Mittel zur Körperpflege.

Bei den Klebstoffen kann es sich um alle unter Verarbeitungsbedingungen flüssigen Prozesswerkstoffe handeln, welche Fügeteile durch Flächenhaftung und innere Festigkeit verbinden können. Bevorzugt sind hier lösemittelhaltige und lösemittelfreie Klebstoffe.

Im Folgenden wird die Erfindung anhand von Beispielen näher erläutert.

### BEISPIELE

### Herstellung der erfindungsgemäßen Diamid-Polyolefinwachs-Mischungen

### Herstellung der Diamid-Komponente (A)

### Allgemeine Herstellvorschrift:

Zwei Äquivalente Säure werden mit einem Äquivalent Diamin im flüssigen Zustand zusammengegeben. Die Mischung wird auf 180 °C erhitzt und das entstehende Reaktionswasser abgeschieden. Wenn die Reaktion abgeschlossen ist, wird das Material heiß auf eine beständige Oberfläche gegossen. Nach Abkühlung wird das Material in Stücke gebrochen.

### Diamid 1:

842 g (2,72 mol) 12-Hydroxystearinsäure wurden in einem Laborreaktor bei 85 °C aufgeschmolzen. 197 g einer 80%igen Lösung von Hexamethylendiamin in Wasser (entsprechend 1,36 mol Hexamethylendiamin) wurden über einen Tropftrichter zudosiert. Nach beendigter Zugabe wurde mit der Wasserabscheidung begonnen. Die Temperatur wurde in 10 °C-Schritten erhöht, bis 180 °C erreicht waren. Nachdem kein Wasser mehr abscheidbar war, wurde für 1 h Vakuum angelegt. Der Reaktionsfortschritt wurde durch Bestimmung der Aminzahl und der Säurezahl (in N-Ethylpyrrolidon als Lösemittel für die Titration) verfolgt. Der Endwert der Säurezahl betrug 1,7 mg KOH/g und die Aminzahl war < 1 mg KOH/g. Nach Abschluss der Reaktion wurde das Vakuum entfernt und die Produktschmelze auf Aluminiumfolie gegossen. Nachdem das Produkt abgekühlt war, wurde es in Stücke gebrochen.

### Diamid 2:

228 g (0,735 mol) 12-Hydroxystearinsäure wurden in einem Laborreaktor bei 85 °C aufgeschmolzen. 22,1 g (0,368 mol) Ethylendiamin wurden über einen Tropftrichter zudosiert. Nach beendigter Zugabe wurde für 1 h auf 110 °C erhitzt. Anschließend wurde die Temperatur auf 180 °C erhöht und Wasser abgeschieden (6 h). Der Reaktionsfortschritt wurde durch Bestimmung der Aminzahl und der Säurezahl (in N-Ethylpyrrolidon als Lösemittel für die Titration) verfolgt. Der Endwert der Säurezahl betrug 1,7 mg KOH/g und die Aminzahl betrug 1,1 mg KOH/g. Nach Abschluss der Reaktion wurde die Produktschmelze auf Aluminiumfolie gegossen. Nachdem das Produkt abgekühlt war, wurde es in Stücke gebrochen.

Die Säurezahl (SZ) wurde gemäß DIN EN ISO 2114 (Juni 2002) bestimmt, wobei N-Ethylpyrrolidon (NEP) als Lösemittel für die Titration verwendet wurde. Die Probe (2,0 bis 3,0 Gramm) wird auf 0,1 mg genau in ein 80 ml-Becherglas eingewogen und in 25 ml NEP heiß (ca.100°C) auf einem Magnetrührer gelöst. Nach dem Lösen werden 25 ml NEP zugegeben. Die Probe wird auf einen Magnetrührer gestellt, die Elektrode gut eingetaucht, einige Tropfen Phenolphthalein werden zugegeben und mit 0,1n ethanolischer KOH warm titriert.

Die Aminzahl (AZ) wurde gemäß DIN 53176 (Nov. 2002) bestimmt, wobei N-Ethylpyrrolidon als Lösemittel für die Titration verwendet wurde. Die Probe (2,0 bis 3,0 Gramm) wird auf 0,1 mg genau in ein 80 ml-Becherglas eingewogen und in 25 ml NEP heiß (ca.100°C) auf einem Magnetrührer gelöst. Nach dem Lösen werden 25 ml NEP zugegeben. Die Probe wird auf einen Magnetrührer gestellt, die Elektrode gut eingetaucht, einige Tropfen Bromphenolblau zugegeben und mit 0,1n isopropanolischer HCl warm titriert.

### Herstellung einer erfindungsgemäßen Kombination aus Diamid-Komponente (A) und Carboxylgruppen enthaltendem Polyolefinwachs (B)

### Allgemeine Herstellvorschrift:

Die Diamidkomponente (A) und die Polyolefinkomponente (B) wurden zusammen in einem Laborreaktor aufgeschmolzen bei 150 °C und durch Rühren mittels eines Rührstabs in der Schmelze homogenisiert. Die Schmelze wurde zum Abkühlen in eine Silikonform gegossen. Das erkaltete Material wurde in Stücke gebrochen, grob mit einer mechanischen Mühle für ca. 2 min vorvermahlen (Thermomix, Hersteller: Vorwerk, Modell TM31-1), und anschließend auf einer Fließbett-Gegenstrahlmühle (Modell: 100-AFG, Hersteller: Hosokawa Alpine, Drehzahl Sichter: 8000 rpm, Innendruck Sichter: 0,0 mbar, Mahlluft: 6,0 mbar; Mahlgas: Stickstoff) mikronisiert.

**Tabelle A: Erfindungsgemäße Beispiele (Beispiele EB1-EB5) und nicht-erfindungsgemäße Vergleichsbeispiele (Vergleichsbeispiele VB6-VB8)**

| **erfindungsgemäße Beispiele EB und Vergleichsbeispiele VB** | **Komponente A: Diamid 1** | **Komponente B: oxidiertes Polyethylenwachs*** |
|---|---|---|
| EB1 | 80 g (20 %) | 320 g (80 %) |
| EB2 | 120 g (30 %) | 280 g (70 %) |
| EB3 | 140 g (35 %) | 260 g (65 %) |
| EB4 | 570 g (38 %) | 930 g (62 %) |
| EB5 | 156 g (39 %) | 244 g (61 %) |
| VB6 | 400 g (40 %) | 600 g (60 %) |
| VB7 | 175 g (50 %) | 175 g (50 %) |
| VB8 | 284,1 g (60 %) | 189,4 g (40 %) |

| | | |
|---|---|---|
| *) mit einer Säurezahl von 17 mg KOH/g nach DIN EN ISO 2114 (Juni 2002), einer Dichte bei 23 °C von 0,95 g/cm³ nach EN ISO 1183-1:2012, einem Tropfpunkt von 104 °C nach ASTM D-3954 - 94(2010) und einer Viskosität von 350 mPas bei (120 °C) nach DIN 53019-1:2008-09 | | |

### Anwendungstechnische Ergebnisse

**Tabelle B: Eingesetzte Rohstoffe**

| **Name** | **Beschreibung** | **Hersteller** |
|---|---|---|
| Setalux 1756 VV-56 | Acrylat-Bindemittel | Nuplex Resins |
| Disperbyk-118 | Netz- und Dispergieradditiv | BYK Chemie GmbH |
| Shellsol A | aromatischer Kohlenwasserstoff C9-C10 | Overlack AG |
| Xylol | | Overlack AG |
| Kronos 2360 | Titandioxid | KRONOS TITAN GmbH |
| Setamine US-138-BB-70 | Melaminharz | Nuplex resins |
| BYK-310 | Oberflächenadditiv | BYK Chemie GmbH |
| Epikote 828 | Bisphenol A Epoxy Bindemittel | Hexion Inc. |
| BYK-9076 | Netz- und Dispergieradditiv | BYK Chemie GmbH |
| BYK-A 530 | Entlüfter | BYK Chemie GmbH |
| Ti-Pure R960 | Titandioxid | Chemours Company |
| Talkum Luzenac 20M2 | Talkum | Imerys Talc Luzenac France |
| EWO | Schwerspat | Sachtleben Chemie GmbH |
| Epikure 3155 | Polyamid Epoxyd Härter | Hexion Inc. |

### Lack-Prüfsvstem 1:

Die Wirkstoffkombinationen wurden in folgende Lackformulierung eingearbeitet: Einbrennlack auf Basis Setalux 1756 VV-56 / Setamine US-138-BB-70

**Tabelle C: Formulierung**

| Mahlqut: | |
|---|---|
| Setalux 1756 VV-65 | 18,6 |
| DIS-118 | 0,6 |
| Shellsol A | 2,1 |
| Xylol | 2,0 |
| Kronos 2360 | 25,2 |
| **Pulverförmige Komposition** | **1,0** |
| *Dispermat, 50°C, 30 min.,* 18 *m*/*s, Zahnscheibe* | |

| Auflackqut: | |
|---|---|
| Setalux 1756 VV-65 | 30,0 |
| Setamine US-138-BB-70 | 16,0 |
| Shellsol A | 3,0 |
| Xylol | 2,3 |
| BYK-310 | 0,2 |
| | 101,0 |

Herstellung des weiß pigmentierten Einbrennlackes nach der in Tabelle C angegebenen Rezeptur:
Die Einarbeitung der pulverförmigen Kombinationen erfolgte während der Anreibung des Mahlguts (30 min) bei einer Aktivierungstemperatur von 50°C. Nach der Herstellung wurden die Lacke über Nacht bei Raumtemperatur (23°C) gelagert und anschließend erfolgten die jeweiligen Abtestungen. Hierfür wurde der Einbrennlack mit einer Nassfilmschichtdicke von 150 µm, auf mit einem kathodischen Elektrotauchlack beschichteten Stahlblechen, 10 x 20 cm der Firma Krüppel GmbH & Co. KG in Krefeld mit einer 60 mm breiten Lackhantel der Firma Byk Gardner appliziert. Nach einer Ablüftzeit von 15 min bei Raumtemperatur erfolgte anschließend das Einbrennen des Lackes im Lacktrockenofen FDL115 der Firma Binder (25 min; 140°C). Nach Lagerung der Aufzüge für einen Tag bei Raumtemperatur (23°C) erfolgten die jeweiligen Abtestungen.

### Messmethoden und Geräte

### Gelbgrad

Der Gelbgrad wurde mittels Color-Guide 45°/0° der Fa. BYK Gardner einen Tag nach dem Einbrennen des Weißlackes, sowie einen Tag nach dem Überbrennen beziehungsweise der UV-Belastung bestimmt. Hierzu wurde der YE 98 Wert gemessen und gegenübergestellt.

### UV-Belastung

Die UV-Belastung zur Bestimmung des Einflusses auf den Gelbgrad wurde auf der UV-Anlage der Fa. IST durchgeführt. Hierzu wurden die Lackaufzüge 10 mal mit einer Geschwindigkeit von 3 m/min. mit Gallium und Quecksilberlampe mit je 120W/cm belastet. Anschließend erfolgte die Messung der YE 98 Werte der belasteten Proben.

### Thermische Belastung

Die thermische Belastung zur Bestimmung des Einflusses auf den Gelbgrad wurde durchgeführt, indem die bereits eingebrannten Lackaufzüge für 30 min bei 180 °C im Lacktrockenofen FDL115 der Firma Binder überbrannt wurden. Anschließend erfolgte die Messung der YE 98 Werte der belasteten Proben.

### Gleitwiderstand

Der Gleitwiderstand wurde mittels eines Slipmeßgerätes (Eigenbau der Firma Byk Gardner) gemessen. Hierbei wird ein 500 g Gewicht auf einem Filzplättchen mit einer Geschwindigkeit von 50 mm/s über den Lackfilm gezogen. Dabei wird mit einem Kraftmesser die Kraft bestimmt, die hierfür erforderlich ist. Anschließend wird gegenüber der Nullprobe die Reduzierung des Gleitwiderstandes berechnet.

### Polarer Anteil der Oberflächenenergie

Der polare Anteil der Oberflächenenergie wurde mittels Kontaktwinkelmessungen auf einem Kontaktwinkelmeßgerät Krüss DAS 100 der Firma Krüss nach DIN 55660-1,-2 2011-12 und - 5 2012-04 bestimmt. Für die Berechnung der polaren Anteile wurden die gemessenen Kontaktwinkel von fünf Messflüssigkeiten (Wasser, Glycerin, Ethylenglykol, 1-Oktanol und n-Dodekan) verwendet.

### Gitterschnitt-Test

Die Lackhaftung wurde mittels Gitterschnittprüfung nach DIN EN ISO 2409 2013-06 unter Verwendung des Mehrschneidenmessers 1 mm der Firma Byk Gardner beurteilt.

### Zwischenschichthaftung

Die Zwischenschichthaftung wurde durch den Abreißversuch zur Beurteilung der Haftfestigkeit nach DIN EN ISO 4624, 2014-06 mit dem Posi Test AT-M digital der Firma DeFelsko durchgeführt. Hierfür wurden zwei Lackschichten mit jeweils 150 µm Nassschichtdicke übereinander appliziert, wobei die zweite Schicht durch Zugabe eines Tropfens Blaupaste geringfügig eingefärbt wurde, um das Bruchbild besser auswerten zu können. Nach Lagerung der Lackfilme nach dem Einbrennen für einen Tag bei Raumtemperatur (23°C) wurden 20 mm Aluminiumstempel mit UHU300 2-Komponenten-Kleber aufgeklebt. Der Abreißversuch erfolgte 24 h nach dem Aufkleben der Stempel nach Lagerung der Proben bei Raumtemperatur (23°C). Die Beurteilung des Bruchbildes (Bruch Substrat zur ersten Schicht / Bruch der ersten Schicht zur zweiten Schicht / Bruch des Klebers) erfolgte nach der DIN.

**Tabelle 1: Anwendungstechnische Ergebnisse zum Gelbgrad frisch (nach dem Einbrennen)**

| **Additiv** | **Gelbgrad YE 98 (frisch)** | **Gelbgrad YE 98 (nach 10 x UV)** |
|---|---|---|
| Kontrolle | 1,45 | 3,00 |
| EB1 | 1,41 | 3,16 |
| EB2 | 1,53 | 3,52 |
| EB3 | 1,69 | ./. |
| EB4 | 1,61 | 3,59 |
| EB5 | 1,67 | 3,42 |
| VB6 | 1,89 | 4,18 |
| VB8 | 2,35 | ./. |

Anhand der Ergebnisse ist ersichtlich, dass der Gelbgrad der frischen Beschichtung durch die erfindungsgemäßen Wirkstoffkombinationen EB1 bis EB5 nicht wesentlich beeinträchtigt wird, während bei den nicht-erfindungsgemäßen Vergleichsbeispielen VB6 und VB8 eine stärkere Vergilbung eintritt.

Anhand der Ergebnisse ist ersichtlich, dass sich der Gelbgrad nach UV-Belastung bei Einsatz der erfindungsgemäßen Wirkstoffkombinationen EB1, EB2, EB4 und EB5 nur geringfügig erhöht, während beim nicht-erfindungsgemäßen Vergleichsbeispiel VB6 eine deutlich stärkere Vergilbung eintritt.

**Tabelle 2: Anwendungstechnische Ergebnisse zum Gelbgrad nach Überbrennen**

| **Additiv** | **Gelbgrad YE 98 (nach 30 min bei 180 °C)** |
|---|---|
| Kontrolle | 2,44 |
| EB1 | 2,34 |
| EB4 | 2,37 |
| EB5 | 2,49 |
| VB6 | 2,88 |
| VB8 | 3,42 |

Anhand der Ergebnisse ist ersichtlich, dass sich der Gelbgrad nach thermischer Belastung bei Einsatz der erfindungsgemäßen Wirkstoffkombinationen EB1, EB4 und EB5 nicht wesentlich verändert, während bei den nicht-erfindungsgemäßen Vergleichsbeispielen VB6 und VB8 eine deutlich stärkere Vergilbung eintritt.

**Tabelle 3: Anwendungstechnische Ergebnisse zum Gleitwiderstand**

| **Additiv** | **Reduzierung des Gleitwiderstands im Vergleich zur Kontrolle [%]** |
|---|---|
| Kontrolle | 0 |
| EB2 | 32 |
| EB4 | 29 |
| VB6 | 16 |

Anhand der Ergebnisse ist ersichtlich, dass sich der Gleitwiderstand durch Einsatz der erfindungsgemäßen Wirkstoffkombinationen EB2 und EB4 vorteilhafterweise deutlich stärker verringern lässt, als im Falle des nicht-erfindungsgemäßen Vergleichsbeispiels VB6.

**Tabelle 4: Anwendungstechnische Ergebnisse zur Oberflächenenergie (polarer Anteil) bestimmt mittels Kontaktwinkelmessungen**

| **Additiv** | **Polarer Anteil der Oberflächenenergie [mN/m]** |
|---|---|
| Kontrolle | 4,4 |
| EB2 | 4,0 |
| EB3 | 4,0 |
| EB4 | 4,6 |
| VB6 | 3,2 |
| VB8 | 3,1 |

Anhand der Ergebnisse ist ersichtlich, dass sich der polare Anteil der Oberflächenenergie bei Einsatz der erfindungsgemäßen Wirkstoffkombinationen EB1 bis EB4 nur geringfügig verändert, während im Falle der nicht-erfindungsgemäßen Vergleichsbeispiele VB6 und VB8 eine deutliche Verringerung eintritt, was sich für die Überlackierbarkeit nachteilig auswirkt.

**Tabelle 5: Anwendungstechnische Ergebnisse zur Haftung**

| **Additiv** | **Haftung (frisch)** | **Haftung nach Überbrennen (30 min, 180 °C)** |
|---|---|---|
| Kontrolle | GT 1 | GT 5 |
| EB2 | GT 1 | GT 1 |
| EB4 | GT 0 | GT 1 |
| VB7 | GT 1-2 | GT 2 |
| VB8 | GT 2 | GT 3 |

### GT 0 sehr gute Haftung - GT 5 schlechte Haftung

Anhand der Ergebnisse ist ersichtlich, dass im Falle der erfindungsgemäßen Wirkstoffkombinationen EB2 und EB4 im Vergleich zu den nicht-erfindungsgemäßen Vergleichsbeispielen VB7 und VB8 eine bessere Lackhaftung vorliegt.

**Tabelle 6: Anwendungstechnische Ergebnisse zur Zwischenschichthaftung (Pull-off Test, AB = Bruch Substrat zu erster Schicht / BC = Bruch der ersten zur zweiten Schicht / XY = Bruch vom Kleber)**

| **Additiv** | **AB [%]** | **BC [%]** | **XY [%]** |
|---|---|---|---|
| Kontrolle | 0 | 80 | 20 |
| EB2 | 95 | 5 | 0 |
| EB3 | 80 | 15 | 5 |
| EB4 | 90 | 10 | 0 |
| EB5 | 90 | 10 | 0 |
| VB6 | 70 | 30 | 0 |
| VB7 | 40 | 60 | 0 |
| VB8 | 0 | 95 | 5 |

Anhand der Ergebnisse ist ersichtlich, dass im Falle der erfindungsgemäßen Wirkstoffkombinationen EB2 bis EB5 im Vergleich zu den nicht-erfindungsgemäßen Vergleichsbeispielen VB6 bis VB8 eine deutlich bessere Zwischenschichthaftung (erkennbar am hohen Anteil von AB) vorliegt.

## Patentansprüche

1. Diamid-Polyolefinwachs-Mischung, umfassend
(A) ein oder mehrere Diamide, die eine Struktur der Formel (I)
X¹-CO-NH-Y-NH-CO-X² (I)
besitzen, worin
X¹ und X², gleich oder verschieden sind und für lineare oder verzweigte, gesättigte oder ungesättigte Kohlenwasserstoffreste mit 3 bis 29 Kohlenstoffatomen stehen und wenigstens einer der Reste X¹ und X² mindestens eine Hydroxylgruppe trägt,
Y für einen zweiwertigen organischen Rest steht, der gewählt ist aus der Gruppe bestehend aus aliphatischen Resten mit 2 bis 26 Kohlenstoffatomen, aromatischen Resten mit 6 bis 24 Kohlenstoffatomen oder araliphatischen Resten mit 7 bis 24 Kohlenstoffatomen, und Y gegebenenfalls sekundäre oder tertiäre Aminogruppen enthält;
(B) ein oder mehrere carboxylgruppenhaltigen Polyolefinwachse (B), die eine Säurezahl von 3 bis 50 mg KOH/g aufweisen; und gegebenenfalls
(C) eine oder mehrere Spezies gewählt aus der Gruppe bestehend aus
(i) einem oder mehreren nicht unter die Definition von (A) fallenden Diamiden, und
(ii) einem oder mehreren anorganischen Salzen, Metall- oder Halbmetalloxiden,
wobei
das oder die Diamide (A) bezogen auf das Gesamtgewicht der Diamid-Polyolefinwachs-Mischung in einer Menge von 20 Gew.-% bis weniger als 40 Gew.-%,
das oder die Polyolefinwachse (B) bezogen auf das Gesamtgewicht der Diamid-Polyolefinwachs-Mischung in einer Menge von mehr als 60 Gew.-% bis zu 80 Gew.-%, und
die Spezies (C) bezogen auf das Gesamtgewicht der Diamid-Polyolefinwachs-Mischung in einer Menge von 0 bis 20 Gew.-%
enthalten sind,
**dadurch gekennzeichnet, dass**
(a) die Diamid-Polyolefinwachs-Mischung bei 25 °C als partikelförmiger Feststoff mit einer Partikelgrößenverteilung von 5 µm ≤ d₉₀ ≤ 100 µm, 1 µm ≤ d₅₀ ≤ 50 µm und 0,1 µm ≤ d₁₀ ≤ 20 µm, gemessen trocken mittels Laserbeugungs-Technologie, vorliegt,
(b) die Partikel (A) und (B) und, sofern (C) zu mehr als 0 Gew.-%, bezogen auf das Gesamtgewicht der Diamid-Polyolefinwachs-Mischung enthalten ist, ebenso (C) enthalten, und
(c) die Summe der gewichtsprozentualen Anteile der Diamide (A) und (C)(i), bezogen auf das Gesamtgewicht der Diamid-Polyolefinwachs-Mischung, weniger als 40 Gew.-% beträgt.

2. Diamid-Polyolefinwachs-Mischung gemäß Anspruch 1, welche aus dem oder den Diamiden (A), dem oder den carboxylgruppenhaltigen Polyolefinwachsen (B) und der oder den Spezies (C) besteht.

3. Diamid-Polyolefinwachs-Mischung gemäß einem der Ansprüche 1 oder 2, **dadurch gekennzeichnet, dass** der gemeinsame Anteil der Diamide (A) und der von diesen verschiedenen Diamide (C)(i), bezogen auf das Gesamtgewicht der Diamid-Polyolefinwachs-Mischung, 31 bis 39 Gew.-% beträgt.

4. Diamid-Polyolefinwachs-Mischung gemäß Anspruch 3, **dadurch gekennzeichnet, dass** der Anteil des Diamids (C)(i), bezogen auf das Gesamtgewicht der Diamid-Polyolefinwachs-Mischung, 0 bis 10 Gew.-% beträgt.

5. Diamid-Polyolefinwachs-Mischung gemäß einem der Ansprüche 1 bis 4, **dadurch gekennzeichnet, dass** im Diamid (A) der Formel (I) X¹ für einen Rest CH₃(CH₂)₅CH(OH)(CH₂)₁₀ steht und X² für einen Rest ausgewählt aus der Gruppe bestehend aus CH₃(CH₂)₅CH(OH)(CH₂)₁₀, C₁₅H₃₁, C₁₇H₃₅, C₁₇H₃₃, C₉H₁₉, C₁₁H₂₃, C₇H₁₅ und C₅H₁₁, und wobei mindestens 40 mol% der Reste X² für eine Gruppe CH₃(CH₂)₅CH(OH)(CH₂)₁₀ stehen.

6. Diamid-Polyolefinwachs-Mischung gemäß einem der Ansprüche 1 bis 5, **dadurch gekennzeichnet, dass** Y gewählt ist aus der Gruppe bestehend aus Alkylenresten mit 2 bis 8 Kohlenstoffatomen und Aralkylenresten mit 8 Kohlenstoffatomen.

7. Diamid-Polyolefinwachs-Mischung gemäß einem der Ansprüche 1 bis 6, **dadurch gekennzeichnet, dass** das carboxylgruppenhaltig Polyolefinwachs (B) erhältlich ist (a) durch Oxidation von Polyolefinwachsen, (b) durch oxidativen Abbau von Polyolefinkunststoffen, (c) durch Polymerisation-von Olefinen mit carboxylgruppenhaltigen oder carbonsäureanhydridhaltigen ethylenisch ungesättigten Monomeren und/oder (d) durch Pfropfen carboxylgruppenhaltiger oder carbonsäureanhydridgruppenhaltiger ethylenisch ungesättigter Monomere auf Polyolefinwachse.

8. Diamid-Polyolefinwachs-Mischung gemäß einem der Ansprüche 1 bis 7, **dadurch gekennzeichnet, dass** das carboxylgruppenhaltige Polyolefinwachs (B) ein Polyethylenhomopolymer ist oder ein Polyethylencopolymer enthaltend mindestens 80 Gew.-% an Ethylen-Wiederholungseinheiten bezogen auf das Gesamtgewicht des Polyethylencopolymeren.

9. Diamid-Polyolefinwachs-Mischung gemäß einem der Ansprüche 1 bis 8, **dadurch gekennzeichnet**, das carboxylgruppenhaltige Polyolefinwachs (B) eine Säurezahl im Bereich von 10 bis 25 mg KOH/g aufweist.

10. Verfahren zur Herstellung einer Diamid-Polyolefinwachs-Mischung gemäß einem oder mehreren der Ansprüche 1 bis 9, **dadurch gekennzeichnet, dass** das oder die Diamide (A) und das oder die Polyolefinwachse (B) und das oder die Spezies (C)
i. in der Schmelze miteinander vermischt und homogenisiert werden,
ii. die homogenisierte Schmelze zur Erstarrung abgekühlt wird,
iii. die erstarrte Schmelze gegebenenfalls zunächst grob zerkleinert wird und
iii. anschließend die erstarrte Schmelze durch Vermahlen in eine partikelförmige Diamid-Polyolefinwachs-Mischung überführt wird, welche die in Anspruch 1 angegebene Partikelgrößenverteilung besitzt.

11. Rheologiesteuerungsmittel enthaltend oder bestehend aus der Diamid-Polyolefinwachsmischung gemäß einem oder mehreren der Ansprüche 1 bis 9 oder hergestellt nach dem Verfahren gemäß Anspruch 10.

12. Verwendung der Diamid-Polyolefinwachs-Mischung aus Ansprüchen 1 bis 9 oder hergestellt nach dem Verfahren gemäß Anspruch 10, als Rheologiesteuerungsmittel.

13. Verwendung der Diamid-Polyolefinwachs-Mischung aus Ansprüchen 1 bis 9 oder hergestellt nach dem Verfahren gemäß Anspruch 10, zur Steuerung der Rheologie von flüssigen, nicht-wässrigen Zusammensetzungen.

14. Flüssige Zusammensetzung enthaltend die Diamid-Polyolefinwachs-Mischung gemäß einem der Ansprüche 1 bis 9 oder hergestellt nach dem Verfahren gemäß Anspruch 10 in einer Menge von 0,1 bis 10 Gew.-% bezogen auf das Gesamtgewicht der flüssigen Zusammensetzung.

15. Flüssige Zusammensetzung gemäß Anspruch 14, **dadurch gekennzeichnet, dass** diese gewählt ist aus der Gruppe bestehend aus Beschichtungsmitteln, Kunststoffformulierungen, Pigmentpasten, Dichtstoffformulierungen, Kosmetika, Keramikformulierungen, Klebstoffformulierungen, flüssigen Formulierungen zum Einsatz bei der Gas- und Ölförderung, Reinigungsmitteln, Vergussmassen, flüssigen Formulierungen zur Herstellung von elektrischen Bauelementen und Schaltkreisen, flüssigen Formulierungen zum Einsatz in Energiespeichermedien, Baustoffformulierungen, Schmierstoffen, Spachtelmassen, Wachsemulsionen, Metallbearbeitungs-Flüssigkeiten, Sprühmitteln, Druckfarben und Tinten.

## Claims

1. Diamide/polyolefin wax mixture comprising
(A) one or more diamides which have a structure of the formula (I)
X¹-CO-NH-Y-NH-CO-X² (I),
where
X¹ and X² are identical or different and are linear or branched, saturated or unsaturated hydrocarbon radicals having from 3 to 29 carbon atoms and at least one of the radicals X¹ and X² bears at least one hydroxyl group,
Y is a divalent organic radical selected from the group consisting of aliphatic radicals having from 2 to 26 carbon atoms, aromatic radicals having from 6 to 24 carbon atoms or araliphatic radicals having from 7 to 24 carbon atoms and Y optionally contains secondary or tertiary amino groups;
(B) one or more carboxyl-containing polyolefin waxes (B) which have an acid number of from 3 to 50 mg KOH/g; and optionally
(C) one or more species selected from the group consisting of
(i) one or more diamides which do not come under the definition of (A) and
(ii) one or more inorganic salts, metal oxides or semimetal oxides,
where
the diamide or diamides (A) are present in an amount of from 20% by weight to less than 40% by weight based on the total weight of the diamide/polyolefin wax mixture,
the polyolefin wax or waxes (B) are present in an amount of from > 60% by weight to 80% by weight based on the total weight of the diamide/polyolefin wax mixture and
the species (C) are present in an amount of from 0 to 20% by weight based on the total weight of the diamide/polyolefin wax mixture,
**characterized in that**
(a) the diamide/polyolefin wax mixture is present as particulate solid having a particle size distribution of 5 µm ≤ d₉₀ ≤ 100 µm, 1 µm ≤ d₅₀ ≤ 50 µm and 0.1 µm ≤ d₁₀ ≤ 20 µm, measured dry by means of laser light scattering technology, at 25°C,
(b) the particles contain (A) and (B) and, if (C) is present in an amount of more than 0% by weight, based on the total weight of the diamide/polyolefin wax mixture, likewise (C) and
(c) the sum of the percentages by weight of the diamides (A) and (C)(i) is less than 40% by weight, based on the total weight of the diamide/polyolefin wax mixture.

2. Diamide/polyolefin wax mixture according to Claim 1 which consists of the diamide or diamides (A), the carboxyl-containing polyolefin wax or waxes (B) and the species (C).

3. Diamide/polyolefin wax mixture according to either Claim 1 or 2, **characterized in that** the total proportion of diamides (A) and the diamides (C)(i) different from these is from 31 to 39% by weight, based on the total weight of the diamide/polyolefin wax mixture.

4. Diamide/polyolefin wax mixture according to Claim 3, **characterized in that** the proportion of the diamide (C)(i) is from 0 to 10% by weight, based on the total weight of the diamide/polyolefin wax mixture.

5. Diamide/polyolefin wax mixture according to any of Claims 1 to 4, **characterized in that**, in the diamide (A) of the formula (I), X¹ is a radical CH₃(CH₂)₅CH(OH)(CH₂)₁₀ and X² is a radical selected from the group consisting of CH₃(CH₂)₅CH(OH)(CH₂)₁₀, C₁₅H₃₁, C₁₇H₃₅, C₁₇H₃₃, C₉H₁₉, C₁₁H₂₃, C₇H₁5 and C₅H₁₁, and where at least 40 mol% of the radicals X² are a group CH₃(CH₂)₅CH(OH)(CH₂)₁₀.

6. Diamide/polyolefin wax mixture according to any of Claims 1 to 5, **characterized in that** Y is selected from the group consisting of alkylene radicals having from 2 to 8 carbon atoms and aralkylene radicals having 8 carbon atoms.

7. Diamide/polyolefin wax mixture according to any of Claims 1 to 6, **characterized in that** the carboxyl-containing polyolefin wax (B) is obtainable (a) by oxidation of polyolefin waxes, (b) by oxidative degradation of polyolefin plastics, (c) by polymerization of olefins with carboxyl-containing or carboxylic anhydride-containing ethylenically unsaturated monomers and/or (d) by grafting carboxyl-containing or carboxylic anhydride-containing ethylenically unsaturated monomers onto polyolefin waxes.

8. Diamide/polyolefin wax mixture according to any of Claims 1 to 7, **characterized in that** the carboxyl-containing polyolefin wax (B) is a polyethylene homopolymer or a polyethylene copolymer containing at least 80% by weight of ethylene repeating units, based on the total weight of the polyethylene copolymer.

9. Diamide/polyolefin wax mixture according to any of Claims 1 to 8, **characterized in that** the carboxyl-containing polyolefin wax (B) has an acid number in the range from 10 to 25 mg KOH/g.

10. Process for producing a diamide/polyolefin wax mixture according to one or more of Claims 1 to 9, **characterized in that** the diamide or diamides (A) and the polyolefin wax or waxes (B) and the species (C)
i. are mixed with one another and homogenized in the melt,
ii. the homogenized melt is cooled to solidification,
iii. the solidified melt is optionally firstly coarsely comminuted and
iii. the solidified melt is subsequently converted by milling into a particulate diamide/polyolefin wax mixture which has the particle size distribution specified in Claim 1.

11. Rheology-controlling agent containing or consisting of the diamide/polyolefin wax mixture according to one or more of Claims 1 to 9 or produced by the process according to Claim 10.

12. Use of the diamide/polyolefin wax mixture according to Claims 1 to 9 or produced by the process according to Claim 10 as rheology-controlling agent.

13. Use of the diamide/polyolefin wax mixture according to Claims 1 to 9 or produced by the process according to Claim 10 for controlling the rheology of liquid, nonaqueous compositions.

14. Liquid composition containing the diamide/polyolefin wax mixture according to any of Claims 1 to 9 or produced by the process according to Claim 10 in an amount of from 0.1 to 10% by weight based on the total weight of the liquid composition.

15. Liquid composition according to Claim 14, **characterized in that** it is selected from the group consisting of coating compositions, polymer formulations, pigment pastes, sealant formulations, cosmetics, ceramic formulations, adhesive formulations, liquid formulations for use in gas and oil recovery, cleaning compositions, embedding compositions, liquid formulations for producing electric components and circuits, liquid formulations for use in energy storage media, building material formulations, lubricants, knifing fillers, wax emulsions, metal working fluids, sprays, printing inks and inks.

## Revendications

1. Mélange diamide-cire de polyoléfine, comprenant :
(A) un ou plusieurs diamides, qui présentent une structure de la formule (I) :
X¹-CO-NH-Y-NH-CO-X² (I)
où
X¹ et X² sont identiques ou différents et représentent des radicaux hydrocarbonés linéaires ou ramifiés, saturés ou insaturés, de 3 à 29 atomes de carbone, et au moins un des radicaux X¹ et X² porte au moins un groupe hydroxyle,
Y représente un radical organique bivalent, qui est choisi dans le groupe constitué par les radicaux aliphatiques de 2 à 26 atomes de carbone, les radicaux aromatiques de 6 à 24 atomes de carbone ou les radicaux araliphatiques de 7 à 24 atomes de carbone, et Y contient éventuellement des groupes amino secondaires ou tertiaires ;
(B) une ou plusieurs cires de polyoléfine contenant des groupes carboxyle (B), qui présentent un indice d'acidité de 3 à 50 mg de KOH/g ; et éventuellement
(C) une ou plusieurs espèces choisies dans le groupe constitué par :
(i) un ou plusieurs diamides non inclus dans la définition de (A), et
(ii) un ou plusieurs sels inorganiques, oxydes de métaux ou de semi-métaux,
dans lequel
le ou les diamides (A) sont contenus, par rapport au poids total du mélange diamide-cire de polyoléfine, en une quantité de 20 % en poids à moins de 40 % en poids,
la ou les cires de polyoléfine (B) sont contenues, par rapport au poids total du mélange diamide-cire de polyoléfine, en une quantité de plus de 60 % en poids à 80 % en poids, et
les espèces (C) sont contenues, par rapport au poids total du mélange diamide-cire de polyoléfine, en une quantité en une quantité de 0 à 20 % en poids,
**caractérisé en ce que**
(a) le mélange diamide-cire de polyoléfine se présente à 25 °C sous la forme d'un solide particulaire ayant une distribution des tailles de particules de 5 µm ≤ d₉₀ ≤ 100 µm, 1 µm ≤ d₅₀ ≤ 50 µm et 0,1 µm ≤ d₁₀ ≤ 20 µm, mesurée à sec au moyen d'une technologie de diffraction laser,
(b) les particules contiennent (A) et (B) et, dans la mesure où (C) est contenu à hauteur de plus de 0 % en poids, par rapport au poids total du mélange diamide-cire de polyoléfine, également (C), et
(c) la somme des proportions en pourcentage en poids des diamides (A) et (C)(i), par rapport au poids total du mélange diamide-cire de polyoléfine, est de moins de 40 % en poids.

2. Mélange diamide-cire de polyoléfine selon la revendication 1, qui est constitué par le ou les diamides (A), la ou les cires de polyoléfine contenant des groupes carboxyle (B) et la ou les espèces (C).

3. Mélange diamide-cire de polyoléfine selon l'une quelconque des revendications 1 ou 2, **caractérisé en ce que** la proportion commune des diamides (A) et des diamides (C)(i) différents de ceux-ci, par rapport au poids total du mélange diamide-cire de polyoléfine, est de 31 à 39 % en poids.

4. Mélange diamide-cire de polyoléfine selon la revendication 3, **caractérisé en ce que** la proportion du diamide (C)(i), par rapport au poids total du mélange diamide-cire de polyoléfine, est de 0 à 10 % en poids.

5. Mélange diamide-cire de polyoléfine selon l'une quelconque des revendications 1 à 4, **caractérisé en ce que**, dans le diamide (A) de la formule (I), X¹ représente un radical CH₃(CH₂)₅CH(OH)(CH₂)₁₀ et X² représente un radical choisi dans le groupe constitué par CH₃(CH₂)₅CH(OH)(CH₂)₁₀, C₁₅H₃₁, C₁₇H₃₅, C₁₇H₃₃, C₉H₁₉, C₁₁H₂₃, C₇H₁5 et C₅H₁₁, et dans lequel au moins 40 % en moles des radicaux X² représentent un groupe CH₃(CH₂)₅CH(OH)(CH₂)₁₀.

6. Mélange diamide-cire de polyoléfine selon l'une quelconque des revendications 1 à 5, **caractérisé en ce qu'**Y est choisi dans le groupe constitué par les radicaux alkylène de 2 à 8 atomes de carbone et les radicaux aralkylène de 8 atomes de carbone.

7. Mélange diamide-cire de polyoléfine selon l'une quelconque des revendications 1 à 6, **caractérisé en ce que** la cire de polyoléfine contenant des groupes carboxyle (B) peut être obtenue (a) par oxydation de cires de polyoléfine, (b) par décomposition oxydative de matières plastiques de polyoléfine, (c) par polymérisation d'oléfines avec des monomères éthyléniquement insaturés contenant des groupes carboxyle ou contenant des groupes anhydride d'acide carboxylique et/ou (d) par greffage de monomères éthyléniquement insaturés contenant des groupes carboxyle ou contenant des groupes anhydride d'acide carboxylique sur des cires de polyoléfine.

8. Mélange diamide-cire de polyoléfine selon l'une quelconque des revendications 1 à 7, **caractérisé en ce que** la cire de polyoléfine contenant des groupes carboxyle (B) est un homopolymère de polyéthylène ou un copolymère de polyéthylène contenant au moins 80 % en poids d'unités de répétition éthylène par rapport au poids total du copolymère de polyéthylène.

9. Mélange diamide-cire de polyoléfine selon l'une quelconque des revendications 1 à 8, **caractérisé en ce que** la cire de polyoléfine contenant des groupes carboxyle (B) présente un indice d'acidité dans la plage allant de 10 à 25 mg de KOH/g.

10. Procédé de fabrication d'un mélange diamide-cire de polyoléfine selon une ou plusieurs des revendications 1 à 9, **caractérisé en ce que** le ou les diamides (A) et la ou les cires de polyoléfine (B) et la ou les espèces (C)
i. sont mélangés les uns avec les autres à l'état fondu et homogénéisés,
ii. la masse fondue homogénéisée est refroidie pour la solidification,
iii. la masse fondue solidifiée est éventuellement tout d'abord broyée grossièrement, et
iii. ensuite, la masse fondue solidifiée est transformée par meulage en un mélange diamide-cire de polyoléfine particulaire, qui présente la distribution de tailles de particules indiquée dans la revendication 1.

11. Agent d'ajustement de la rhéologie contenant ou constitué par le mélange diamide-cire de polyoléfine selon une ou plusieurs des revendications 1 à 9 ou fabriqué par le procédé selon la revendication 10.

12. Utilisation du mélange diamide-cire de polyoléfine selon les revendications 1 à 9 ou fabriqué par le procédé selon la revendication 10, en tant qu'agent d'ajustement de la rhéologie.

13. Utilisation du mélange diamide-cire de polyoléfine selon les revendications 1 à 9 ou fabriqué par le procédé selon la revendication 10, pour l'ajustement de la rhéologie de compositions liquides non aqueuses.

14. Composition liquide contenant le mélange diamide-cire de polyoléfine selon l'une quelconque des revendications 1 à 9 ou fabriqué par le procédé selon la revendication 10 en une quantité de 0,1 à 10 % en poids, par rapport au poids total de la composition liquide.

15. Composition liquide selon la revendication 14, **caractérisée en ce que** celle-ci est choisie dans le groupe constitué par les agents de revêtement, les formulations de matières plastiques, les pâtes de pigments, les formations d'agents d'étanchéité, les cosmétiques, les formulations de céramiques, les formulations d'adhésifs, les formulations liquides destinées à une utilisation dans la production de gaz et de pétrole, les agents détergents, les masses de scellement, les formulations liquides destinées à la fabrication de composants électriques et de circuits, les formulations liquides destinées à une utilisation dans des milieux de stockage d'énergie, les formulations de matériaux de construction, les lubrifiants, les enduits, les émulsions de cires, les liquides pour l'usinage de métaux, les agents de pulvérisation, les encres d'impression et les encres.
